# EUROPEAN PATENT APPLICATION

(11) **EP 4 819 623 A1**
(43) Date of publication of application: **07.10.2026**
(21) Application number: 25749102.7
(22) Date of filing: 17.01.2025
(51) Int. Cl.: H04N 21/4788, H04N 21/44, H04N 21/439, H04N 21/434, G06Q 50/50, H04L 51/02, H04L 51/04, G06F 40/284, G06F 40/263, G06F 40/58

(54) **APPARATUS AND METHOD FOR PROVIDING CHAT SERVICE**

(30) Priority: 29.01.2024 KR 20240012875
(71) Applicant: Samsung Electronics Co., Ltd., Suwon-si, Gyeonggi-do 16677 (KR)
(72) Inventor: JUNG, Minhyo, Suwon-si Gyeonggi-do 16677 (KR); KIM, Donguk, Suwon-si Gyeonggi-do 16677 (KR); KIM, Sehyun, Suwon-si Gyeonggi-do 16677 (KR)
(74) Representative: Appleyard Lees IP LLP
(86) International application number: PCT/KR2025/001014
(87) International publication number: WO 2025/165015

(57) **Abstract**

A display device according to an embodiment disclosed herein may display content, identify a chat message input by a user while the content is displayed, change the identified chat message to an abbreviated message having the same or a similar meaning as the identified chat message on the basis of context information associated with the displayed content, and transmit the abbreviated message to a server capable of providing a chatbot response.

## Description

### [Technical Field]

The disclosure relates to a device and method for providing a chat service.

### [Background Art]

Display devices, such as smart TVs, may provide chat services. For example, a display device may provide a chat service that supports the user to chat in real-time while content is being displayed. Based on the chat service, the user of the display device may be able to share emotions or information with other users watching the same content while watching the content.

Chatbots may participate in a chat room created by the chat service. Chatbots may interact with users within the chat room based on artificial intelligence (AI) technology. For example, a chatbot may provide response messages based on messages of the users in the chat room or conversations between the users.

### [Disclosure]

### [Technical Solution]

In general, chatbots may be used based on cloud technology. The response messages provided by the chatbot in the chat room may be generated by a server on the cloud and, depending on the server usage of the display device, costs may be incurred. For example, costs may be determined based on the amount of inputs (e.g., the number of user messages or conversations) that the display device transmits to the server to obtain a response message. Therefore, a method to efficiently operate chatbots without the burden of server usage costs is required.

If there are few users using the chat service on the display device, chat between users may not be activated and service usage may decrease. Taking this into account, there is a demand to enable a chat service regardless of the number of users.

An embodiment of the disclosure may provide a device and method for providing a chat service.

An embodiment of the disclosure may provide a device and method capable of reducing server usage costs associated with a chatbot.

An embodiment of the disclosure may provide a device and method capable of efficiently operating a chatbot.

An embodiment of the disclosure may provide a device and method capable of activating a chat service.

A display device according to an embodiment of the disclosure may comprise a display, a transceiver, a memory to store at least one program, and at least one processor electrically connectable to the memory and including a processing circuit to execute at least one instruction of the at least one program while connected to the memory. At least one processor may, individually or in combination, control the display to display content, identify a chat message input by a user while the content is displayed, change the identified chat message into an abbreviated message having a meaning identical or similar to the identified chat message, based on context information associated with the content being displayed, and control the transceiver to transmit the abbreviated message to a server enabled to provide a chatbot response.

According to an embodiment, the abbreviated message may include a number of tokens smaller than a number of tokens of the identified chat message.

According to an embodiment, at least one processor may, individually or in combination, change a first text included in the identified chat message into a second text including a number of tokens smaller than a number of tokens of the first text based on a language model, and use a message including the second text as the abbreviated message.

According to an embodiment, at least one processor may, individually or in combination, detect a language of the identified chat message based on a language model, count a first token number which is a number of tokens of the identified chat message, translate the identified chat message into a language different from the detected language, count a second token number which is a number of tokens of the translated chat message, and use the translated chat message as the abbreviated message in response to the second token number being smaller than the first token number.

According to an embodiment, at least one processor may, individually or in combination, detect a language of the identified chat message based on a language model, count a first token number which is a number of tokens of the identified chat message, determine a second token number smaller than the first token number, translate the identified chat message into a language different from the detected language based on the determined second token number, and use the translated chat message as the abbreviated message.

According to an embodiment, at least one processor may, individually or in combination, identify an emoticon included in the identified chat message, obtain a name of the emoticon based on a language model, identify a meaning of the emoticon based on the obtained name and generates a first text indicating the identified meaning, generate a second text having a smaller number of tokens than the first text by abbreviating the first text based on the context information, and use a message including the second text as the abbreviated message.

According to an embodiment, the context information may be generated based on meta information. The meta information may include at least one of broadcast time information, broadcast channel information, a broadcast program title, a broadcast program description, a broadcast program genre, broadcast program cast information, broadcast program staff information, or broadcast program screen information obtained based on an electronic program guide (EPG).

According to an embodiment, the context information may be generated based on meta information. The meta information may include at least one of information about a person or an object appearing in the content or background information about the content obtained by screen analysis of the display device, voice or sound information obtained by audio analysis of the display device, text information obtained from a screen of the content by a text detection operation, information about one or more chat participants including the user, or conversation history information about the one or more chat participants.

According to an embodiment, at least one processor may, individually or in combination, change the meta information to abbreviated information having a similar meaning to the meta information, and control the transceiver to transmit the abbreviated information to the server. The abbreviated information may include a number of tokens smaller than a number of tokens of the meta information.

According to an embodiment, at least one processor may, individually or in combination, receive a response message to the abbreviated message from the server through the transceiver, and control the display to display the received response message as the chatbot response.

A method for providing a chat service by a display device, according to an embodiment of the disclosure, may comprise displaying content, identifying a chat message input by a user while the content is displayed, changing the identified chat message into an abbreviated message having a meaning identical or similar to the identified chat message, based on context information associated with the content being displayed, and transmitting the abbreviated message to a server enabled to provide a chatbot response.

According to an embodiment, the abbreviated message may include a number of tokens smaller than a number of tokens of the identified chat message.

According to an embodiment, changing into the abbreviated message may include changing a first text included in the identified chat message into a second text including a number of tokens smaller than the first text, based on a language model, and using a message including the second text as the abbreviated message.

According to an embodiment, changing into the abbreviated message may include detecting a language of the identified chat message based on a language model, counting a first token number which is a number of tokens of the identified chat message, translating the identified chat message into a language different from the detected language, counting a second token number which is a number of tokens of the translated chat message, and using the translated chat message as the abbreviated message in response to the second token number being smaller than the first token number.

According to an embodiment, changing into the abbreviated message may include detecting a language of the identified chat message based on a language model, counting a first token number which is a number of tokens of the identified chat message, determining a second token number smaller than the first token number, translating the identified chat message into a language different from the detected language based on the determined second token number, and using the translated chat message as the abbreviated message.

According to an embodiment, changing into the abbreviated message may include identifying an emoticon included in the identified chat message, obtaining a name of the emoticon based on a language model, identifying a meaning of the emoticon based on the obtained name and generating a first text indicating the identified meaning, generating a second text having a smaller number of tokens than the first text by abbreviating the first text based on the context information, and using a message including the second text as the abbreviated message.

According to an embodiment, the context information may be generated based on meta information. The meta information may include at least one of broadcast time information, broadcast channel information, a broadcast program title, a broadcast program description, a broadcast program genre, broadcast program cast information, broadcast program staff information, or broadcast program screen information obtained based on an electronic program guide (EPG).

According to an embodiment, the context information may be generated based on meta information. The meta information may include at least one of information about a person or an object appearing in the content or background information about the content obtained by screen analysis of the display device, voice or sound information obtained by audio analysis of the display device, text information obtained from a screen of the content by a text detection operation, information about one or more chat participants including the user, or conversation history information about the one or more chat participants.

According to an embodiment, the method may further comprise changing the meta information to abbreviated information having a similar meaning to the meta information, and transmitting the abbreviated information to the server. The abbreviated information may include a smaller number of tokens than a number of tokens of the meta information.

According to an embodiment, the method may further comprise receiving a response message to the abbreviated message from the server, and displaying the received response message as the chatbot response.

### [Description of Drawings]

FIG. 1 is a view illustrating an output screen of a chat service provided by a display device according to an embodiment;
FIG. 2 is a view illustrating a system for providing a chat service, according to an embodiment;
FIG. 3 is a view schematically illustrating configurations and operations of a display device and a chat server, according to an embodiment;
FIG. 4 is a flowchart illustrating operations of a display device according to an embodiment;
FIG. 5 is a flowchart illustrating an operation of abbreviating a chat message based on a text replacement scheme by a display device, according to an embodiment;
FIG. 6A is a flowchart illustrating an operation of abbreviating a chat message through translation by a display device according to an embodiment;
FIG. 6B is a flowchart illustrating another operation of abbreviating a chat message through translation by a display device according to an embodiment;
FIG. 7 is a flowchart illustrating an operation of abbreviating a chat message through semantic compression of an emoticon by a display device, according to an embodiment;
FIG. 8 is a view illustrating an example in which a meaning of an emoticon is compressed by a display device according to an embodiment;
FIG. 9 is a flowchart illustrating an operation of generating context information based on an EPG by a display device, according to an embodiment;
FIG. 10 is a flowchart illustrating an operation of generating context information based on a screen analysis operation or a text detection operation by a display device according to an embodiment;
FIG. 11 is a flowchart illustrating operations of a server according to an embodiment;
FIG. 12 is a block diagram illustrating a configuration of a display device according to an embodiment; and
FIG. 13 is a block diagram illustrating a configuration of a server according to an embodiment.

In the following description, referring to the accompanying drawings, certain examples for implementing the disclosed disclosure are illustrated as examples in the drawings. Further, other examples may be used and structural changes or modification may be made without departing from the scope of various examples.

### [Mode for Invention]

Hereinafter, various embodiments of the disclosure will be described in detail with reference to the accompanying drawings so that those having ordinary knowledge in the technical field to which the disclosure pertains may easily practice the disclosed disclosure with ease. However, the disclosure may be implemented in various different forms and is not limited to the embodiments described herein. With regard to description of drawings, the same or like components may be indicated by the same or like reference numerals. Further, in the drawings and their related descriptions, descriptions of well-known functions and configurations may be omitted for clarity and brevity.

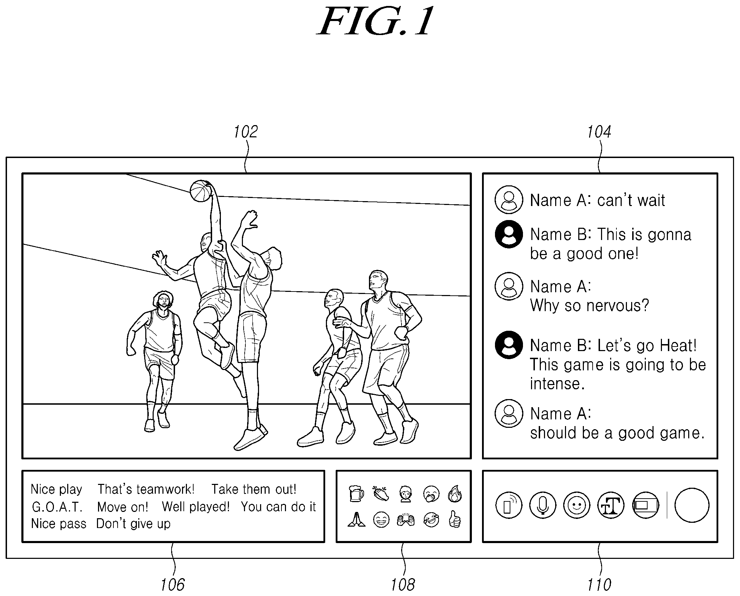

FIG. 1 is a view illustrating an output screen of a chat service provided by a display device according to an embodiment.

Referring to FIG. 1, a display device may provide a chat service that enables real-time chatting while viewing content 102 such as a streaming image or a broadcast image. The chat service may indicate a service that allows the user to open a chat room or enter an already existing chat room to communicate with other users in order to share emotions or information related to the content 102 that the user is watching. According to an embodiment, the chat service may be referred to by various terms such as a 'live chat service', a 'real-time chat service', a 'chat-together service', or a 'watch-together service'.

According to an embodiment, the display device may output a chat window (or chat screen) 104 for chatting on the display while displaying the content 102 selected by the user. The chat window 104 may be displayed at a preset position. The preset position may include a position set by the user or the display device, and may be inside or outside the screen on which the content 102 is displayed. For example, when the chat window 104 is displayed in the screen on which the content 102 is displayed, the chat window 104 may be displayed at a position (e.g., an edge portion of the screen) that does not interfere with the user's viewing of the content. For example, when the chat window 104 is displayed outside the screen on which the content 102 is displayed, the chat window 104 may be displayed at a position corresponding to any one of an upper side, a lower side, a left side, or a right side of the corresponding screen.

According to an embodiment, the display device may display or output chat messages or conversation messages between the users watching the content 102 on the chat window 104. According to an embodiment, the chat window 104 may be a chat window of a chat room opened by the user of the display device or a chat window of a chat room that already exists. The user may communicate with other users in real time through the chat window 104.

According to an example, the chat service may be a chatbot participation chat service in which a chatbot participates in the chat. The chatbot may provide a response message to the user's message (e.g., the user's chat message, or the user's utterance or conversation) based on artificial intelligence (AI) technology. The chatbot may be based on a cloud server. For example, when a message is input by the user, the input message may be transmitted to a chatbot server on the cloud. The chatbot server may analyze the input message and generate a response message based on the analysis result. The generated response message may be transferred to the display device and displayed on the chat window 104 as a message of the chatbot.

According to an embodiment, the chat service may include a text-based chat service, and may support various types of inputs for chatting. For example, various types of inputs may include an input using a remote controller, an input using a mobile device, an input using a voice input device, an input through a text input device, or an input through a touch on a touch screen.

According to an embodiment, when the display device is a TV, an input using a remote controller may be supported. The user may input a chat message by manipulating one or more buttons of the remote controller or by manipulating a virtual keyboard displayed on the display of the TV with the remote controller. Infrared communication may be performed between the TV and the remote controller, but various communication may be performed without limitations thereto.

According to an embodiment, when there is a mobile device interworking with a display device, an input using the mobile device may be supported. For example, the mobile device may be an electronic device capable of wireless communication such as a mobile phone, a tablet personal computer (PC), or a wearable device. The display device and the mobile device may be connected based on various wireless communication technologies such as wireless fidelity (Wi-Fi) or Bluetooth. When the display device and the mobile device are completely connected, they may perform operations such as information exchange, data sharing, screen mirroring, or remote control. According to an embodiment, when the mobile device remotely controls the display device, the user may input a chat message to the display device by manipulating a graphical user interface (GUI) displayed on the display of the mobile device or at least one button included in the mobile device. According to an embodiment, the user may input a chat message by manipulating the virtual keyboard displayed on the display device with the mobile device.

According to an embodiment, an input using a voice input device may be supported in the display device. For example, the voice input device may be any one of a voice input device (e.g., a microphone of a display device) embedded in the display device or a voice input device (e.g., a microphone embedded in the mobile device or a separate microphone device) interworking with the display device. The user may input a voice message using the voice input device. The display device may convert a voice message input by the user into a text message and display the text message, and may output the displayed text message to the chat window 104 according to the user's selection as the chat message. According to an embodiment, the display device may convert the voice message input by the user into a text message using a speech-to-text (STT) engine. The STT engine may be a system, an application, or software that converts voice into text, and may be included in the display device.

According to an embodiment, an input using a text input device may be supported in the display device. For example, the text input device may be an input device (e.g., a keyboard) wiredly or wirelessly connected to the display device. The text input device may be connected to the display device wiredly through a high definition multimedia interface (HDMI) cable or a universal serial bus (USB) cable, or may be connected to the display device wirelessly based on wireless communication such as Wi-Fi or Bluetooth. The user may input a chat message using the text input device connected to the display device.

According to an embodiment, an input through a touch on a touch screen may be supported in the display device. For example, when the display of the display device is a touch screen, a chat message may be input based on the user's touch input. The user's touch input may be performed at a position associated with a GUI (e.g., a virtual keyboard) displayed on the touch screen of the display device.

According to an embodiment, the display device may display recommended message information 106 for convenience of inputting a chat message. For example, the recommended message information 106 may include one or more recommended chat messages based on the chat content (or the chat context) of the chat window 104. When at least one of the one or more recommended chat messages is selected by the user, the display device may output the at least one chat message selected by the user to the chat window 104. According to an embodiment, the user may select at least one chat message based on at least one of the above-described various types of inputs (e.g., an input using a remote controller, a mobile device, a voice input device, an input using a text input device, or a touch input of the user).

According to an embodiment, the display device may display recommended emoticon information 108 for convenience of inputting the chat message. For example, the recommendation emoticon information 108 may include one or more recommendation emoticons based on the chat content (or the chat context) of the chat window 104. When at least one of the one or more recommended emoticons is selected by the user, the display device may output the at least one emoticon selected by the user to the chat window 104. According to an embodiment, the user may select at least one emoticon based on at least one of various types of inputs (e.g., an input using a remote controller, a mobile device, a voice input device, an input using a text input device, or a touch input of the user).

According to an embodiment, the display device may display a menu bar 110 for selectively using various types of inputs. For example, the menu bar 110 may include a menu related to at least one of an input using a remote controller, an input using a mobile device, an input using a voice input device, or an input (e.g., an emoticon or text input using a virtual keyboard) based on a touch input. The menu bar 110 may be initially controlled by an input using a remote controller, and may be changed to any one of at least one menu included in the menu bar 110 according to the user's selection.

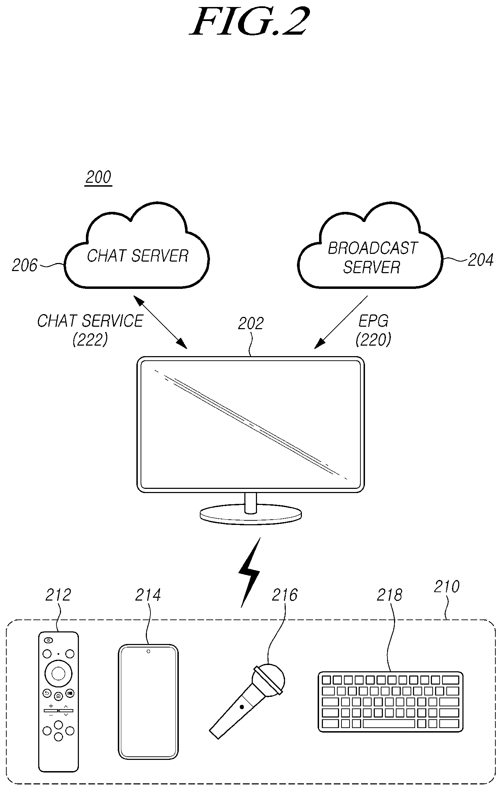

FIG. 2 is a view illustrating a system for providing a chat service, according to an embodiment;
Referring to FIG. 2, a system 200 providing a chat service may include a display device 202 and at least one server (e.g., a broadcast server 204 and/or a chat server 206).

According to an embodiment, the display device 202 may be a device that displays a real-time broadcast image based on a broadcast channel or a streaming image provided from a content server or another device. The display device 202 may be a device capable of performing various computing functions such as an input function (e.g., a voice input function), an output function (e.g., a voice or audio output function), or a communication function, as well as a display function. For example, the display device 202 may be a TV, a smart TV, a mobile device (e.g., a tablet PC, a wearable device, a smartphone, or a mobile phone), a PC, a desktop computer, a notebook computer, a personal digital assistant (PDA), a laptop computer, a media player, an e-book terminal, a digital broadcasting terminal, a navigation device, a kiosk, a digital camera, or a home appliance. The display device 202 is not limited to the above-described devices, and may be another type of electronic device.

According to an embodiment, the display device 202 may perform communication using any various wired or wireless communication protocols such as Ethernet, global system for mobile communications (GSM), enhanced data GSM environment (EDGE), code division multiple access (CDMA), time division multiplexing access (TDMA), long term evolution (LTE), LTE advance (LTE-A), new radio (NR), Wi-Fi or Bluetooth. For example, the display device 202 may communicate with the broadcast server 204 and/or the chat server 206 based on a wired or wireless communication protocol.

According to an embodiment, the display device 202 may be an on-device AI device or an edge or edged AI device capable of performing an AI function. According to an embodiment, the display device 202 may use an AI function to perform an operation (e.g., an operation of abbreviating or compressing a chat message) of optimizing a chat message input by the user to reduce costs associated with the chat server 206 and analyze the displayed screen to generate meta information.

According to an embodiment, the display device 202 may be wiredly or wirelessly connected to one or more electronic devices 210 that may be used for various types of inputs. For example, the display device 202 may be connected to at least one of the remote controller 212, the mobile device 214, the voice input device 216, or the text input device 218 wiredly or wirelessly. The user of the display device 202 may perform an input operation (e.g., an operation of inputting a chat message) using at least one of the remote controller 212, the mobile device 214, the voice input device 216, or the text input device 218. According to an embodiment, the display of the display device 202 may be a touch screen, and the user of the display device 202 may control the display device 202 or perform an input operation through a touch.

According to an embodiment, the broadcast server 204 may provide various pieces of broadcast information to the display device 202. For example, the broadcast server 204 may provide an electronic program guide (EPG) 220 to the display device 202. The EPG 220 is information associated with one or more broadcast programs and may include at least one of broadcast time information (e.g., broadcast start time and/or broadcast end time), broadcast channel information (e.g., channel name, channel logo, or channel number), broadcast program title, broadcast program description, broadcast program genre (e.g., drama, sports, documentary, or entertainment), broadcast program cast information, broadcast program staff information, or broadcast program screen information.

According to an embodiment, the display device 202 may receive the EPG 220 periodically or aperiodically. According to an embodiment, the display device 202 may receive the EPG 220 at a set time or a random time. According to an embodiment, when the content being displayed (or the content being watched by the user) is a broadcast program, the display device 202 may use the EPG to generate context information associated with the broadcast program.

According to an embodiment, the chat server 206 may be a server on the cloud, and may be a server capable of communicating with the display device 202 to provide the chat service 222 to the user. The chat server 206 may be one independent server or may include two or more servers. According to an embodiment, the chat server 206 may include a language model and may provide a paid service in which a cost is charged as much as the usage of the language model. For example, the chat server 206 may be a server that provides a chatbot response to an input message based on the language model. The service cost associated with the chat server 206 may be determined based on the size, length, or amount of the message of the message (e.g., the user's chat message) input from the display device 202 to the chat server 206.

According to an embodiment, the display device 202 may perform the operation of compressing the message input to the chat server 206 so as to reduce the usage cost of the chat server 206. For example, the display device 202 may perform a compression operation of replacing a word or sentence included in the user's chat message with a word or sentence of a shorter length having the same or similar meaning, or reducing the size, length, or amount of the user's chat message through translation. If the compression operation is performed, the chat message of the user may be abbreviated, and the abbreviated message may be transmitted to the chat server 206, thereby saving the usage cost of the chat server 206.

Hereinafter, for convenience of description, an example is described in which the display device 202 uses a token, which is a minimum semantic unit of a language model, as a unit for checking the size, length, or amount of a message. However, the unit in which the display device 202 checks the size, length, or amount of the message is not limited to a token, and other units (e.g., bits or bytes) may be used.

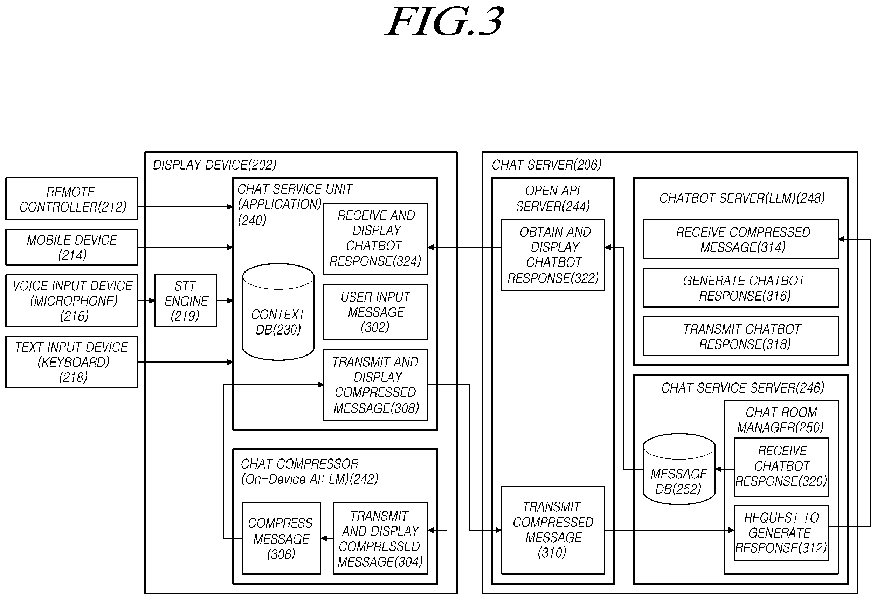

FIG. 3 is a view schematically illustrating configurations and operations of a display device and a chat server, according to an embodiment;
Referring to FIG. 3, the display device 202 may be connected to one or more electronic devices (e.g., at least one of the remote controller 212, the mobile device 214, the voice input device 216, or the text input device 218) that may be used for various types of inputs wiredly or wirelessly. According to an embodiment, the display device 202 may include an STT engine 219 that converts a voice message input by the user through the voice input device 216 into a text message.

According to an embodiment, the display device 202 may include a context database (DB) 230 for storing context information. According to an embodiment, the display device 202 may generate context information based on the meta information. For example, the meta information may include information based on the EPG 220 (e.g., at least one of broadcast time information, broadcast channel information, broadcast program title, broadcast program description, broadcast program genre, broadcast program cast information, broadcast program staff information, or broadcast program screen information), information obtained by screen analysis of the display device 202 (e.g., at least one of information about the person or object appearing in content or background information about content), information obtained by audio analysis of the display device 202 (e.g., voice information or sound such as a voice tone of the person in content), text information obtained from the screen of the content by the text detection operation, chat participant information (e.g., the number of participants, participant nationality, participant gender, participant age, or participant account information), or chat history information about the chat participant.

According to an embodiment, the information obtained by the screen analysis of the display device 202 may be obtained through aperiodic screen analysis of the display device 202 using computer vision, and may be used to identify the genre of the content or the atmosphere or information about the content. For example, when the content is a broadcast image broadcasting a sports game, the type information about the sports game (e.g., soccer, baseball, or basketball), the name of the teams participating in the sports game, the score information, or the win/loss information may be obtained through the screen analysis result.

According to an embodiment, the display device 202 may include a chat service unit 240 and a chat compressor 242. According to an embodiment, the chat service unit 240 may include an application for providing a chat service. For example, the chat service unit 240 may provide the user interface (UI) associated with the chat service, and may receive a chat message from the user through the UI or output a response message (e.g., a chatbot response or a chat message of another user) to the chat message of the user to the chat window.

According to an embodiment, the chat compressor 242 may include a language model (LM) that may be used for an on-device AI function. The chat compressor 242 may compress a chat message or meta information input by the user using LM. For example, the chat compressor 242 may perform a compression operation of abbreviating a chat message or meta information for transmission to the chat server 206 using the LM.

According to an embodiment, the compression operation may include an operation of replacing or changing a text (or a word or a sentence) included in a chat message or meta information with another text. The other text may be a text having the same or similar meaning as the existing text and having a smaller number of tokens.

The following Table 1 is a table illustrating chat messages between chat participants watching a sports broadcast program. Chat messages illustrated in Table 1 may be included in meta information as conversation history information between chat participants and may be compressed by a compression operation. Any one of the chat messages illustrated in Table 1 may be a message input by the user of the display device 202, and may be compressed similarly to compression of meta information.

**[Table 1]**

| |
|---|
| Participant 1: can't wait (3 tokens) |
| Participant 2: Why so nervous? (4 tokens) |
| Participant 3: should be a good game. (5 tokens) |

Referring to Table 1, the number of tokens of a chat message (can't wait) of participant 1 may be 3, the number of tokens of a chat message (Why so nervous?) of participant 2 may be 4, the number of tokens of a chat message (should be a good game.) of participant 3 may be 5, and the total number of tokens of chat messages in the chat room may thus be 12. The chat compressor 242 may abbreviate at least one of chat messages in the chat room. For example, the chat compressor 242 may change chat messages of participants 1 to 3 into abbreviated messages as shown in Table 2 below.

**[Table 2]**

| |
|---|
| Participant 1: excited (1 token) |
| Participant 2: feeling anxious? (2 tokens) |
| Participant 3: anticipating a great match (4 tokens) |

Referring to Table 2, the chat message of participant 1 was changed from "can't wait" to "excited", and the number of tokens corresponding to the chat message of participant 1 was reduced from 3 to 1 by the change. The chat message of participant 2 was changed from "Why so nervous?" to "feeling anxious?", and the number of tokens corresponding to the chat message of participant 2 was reduced from 4 to 2 by the change. The chat message of participant 3 was changed from "should be a good game" to "anticipating a great match", and the number of tokens corresponding to the chat message of participant 3 was reduced from 5 to 4. As a result, the total number of tokens of chat messages of participants 1 to 3 was reduced from 12 to 7, and meta information (e.g., conversation history information between chat participants) was reduced by 32% compared to meta information before the change. As such, the chat compressor 242 may reduce the number of tokens while maintaining the meaning of the chat message or meta information based on the operation of replacing the text. According to an embodiment, the compression operation may include an operation of abbreviating a plurality of texts into one text or deleting at least one of the plurality of texts when there are a plurality of texts having overlapping meanings in the chat message or meta information.

According to an embodiment, the compression operation may include an operation of deleting unnecessary text not related to the context of the conversation in the chat room or the context information about the content from the chat message or the meta information.

According to an embodiment, the compression operation may include an operation of abbreviating the chat message or meta information through translation. For example, the chat compressor 242 may detect the language (e.g., Korean) of the chat message and count the number of tokens of the chat message. The chat compressor 242 may translate the language of the chat message into another language (e.g., English) using the LM and count the number of tokens of the translated chat message. The chat compressor 242 may compare the number of tokens of the chat message before translation with the number of tokens of the translated chat message. The chat compressor 242 may or may not use the translated chat message as the abbreviated message based on the comparison result.

According to an embodiment, when the number of tokens of the translated chat message is smaller than the number of tokens of the pre-translation chat message, the chat compressor 242 may use the translated chat message as the abbreviated message. Table 3 below is a table illustrating chat messages before and after translation.

**[Table 3]**

| |
|---|
| <before translation - 22 tokens in total> |
| Participant 1: They play soccer really well today. (7 tokens) |
| Participant 2: They are the best!! (5 tokens) |
| Participant 3: It would be nice to score just one more goal (10 tokens) |
| <after translation - 14 tokens in total> |
| Participant 1: 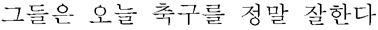 . (6 tokens) |
| Participant 2: 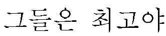 !! (3 tokens) |
| Participant 3: 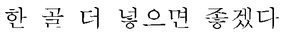 (5 tokens) |

Referring to Table 3, the chat compressor 242 may detect that the language of the chat messages before translation is English, and count the number of tokens for each or all of the chat messages. For example, the chat compressor 242 counts the number of tokens of the chat message (They play soccer really well today) of participant 1 as 7, the number of tokens of the chat message (They are the best!!) of participant 2 as 5, and the number of tokens of the chat message (It would be nice to score just one more goal) of participant 3 as 10. The chat compressor 242 may count the total number of tokens for chat messages of participants 1 to 3 as 22.

As shown in Table 3, the chat compressor 242 may translate chat messages in English into Korean. The chat compressor 242 may count the number of tokens for each or all of the chat messages translated into Korean. For example, the chat compressor 242 may translate the chat message "They play soccer really well today" of participant 1 as " 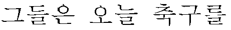 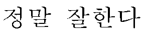 ." and count the number of tokens corresponding to the translated chat message of the participant 1 as 6. The chat compressor 242 may translate "They are the best!!" which is the chat message of participant 2 into " 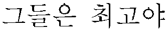 !!", and count the number of tokens corresponding to the translated chat message of participant 2 as 3. The chat compressor 242 may translate "It would be nice to score just one more goal", which is the chat message of participant 3, into " 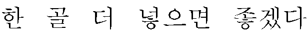 ", and count the number of tokens corresponding to the translated chat message of participant 3 as 5. The chat compressor 242 may count the total number of tokens for chat messages of participants 1 to 3 as 14.

The chat compressor 242 may identify that the number of tokens for each or all of the chat messages of participants 1 to 3 is further reduced after translation compared to before translation. For example, the chat compressor 242 may identify that the number of tokens corresponding to the chat message of participant 1 is reduced from 7 to 6 by translation, the number of tokens corresponding to the chat message of participant 2 is reduced from 5 to 3 by translation, and the number of tokens corresponding to the chat message of participant 3 is reduced from 10 to 5 by translation. As a result, the chat compressor 242 may identify that the total number of tokens of chat messages of participants 1 to 3 is reduced by about 36% from 22 to 14. Accordingly, the chat compressor 242 may use the translated chat message as the abbreviated message based on the number of tokens reduced by translation.

According to an embodiment, when the number of tokens of the translated chat message is equal to or larger than the number of tokens of the pre-translation chat message, the chat compressor 242 may perform a compression operation of another method (e.g., a text replacement scheme) without using the translated chat message. Table 4 below is a table illustrating chat messages before and after translation.

**[Table 4]**

| |
|---|
| <before translation - 12 tokens in total> |
| Participant 1: can't wait (3 tokens) |
| Participant 2: Why so nervous? (4 tokens) |
| Participant 3: should be a good game. (5 tokens) |
| <after translation - 19 tokens in total> |
| Participant 1: 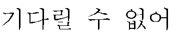 (5 tokens) |
| Participant 2: 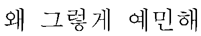 ? (7 tokens) |
| Participant 3: 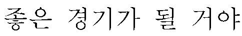 . (7 tokens) |

Referring to Table 4, the chat compressor 242 may detect that the language of the chat messages before translation is English, and count the number of tokens for each or all of the chat messages. For example, the chat compressor 242 may count the number of tokens of the chat message (can't wait) of participant 1 as 3, count the number of tokens of the chat message (Why so nervous?) of participant 2 as 4, and count the number of tokens of the chat message (should be a good game.) of participant 3 as 5. The chat compressor 242 may count the total number of tokens for chat messages of participants 1 to 3 as 12. As shown in Table 4, the chat compressor 242 may translate chat messages in English into Korean. The chat compressor 242 may count the number of tokens for each or all of the chat messages translated into Korean. For example, the chat compressor 242 may translate "can't wait", which is the chat message of participant 1, into " 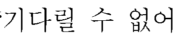 ", and count the number of tokens corresponding to the translated chat message of participant 1 as 5. The chat compressor 242 may translate the chat message "Why so nervous?" of participant 2 into " 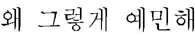 ?" and count the number of tokens corresponding to the translated chat message of participant 2 as 7. The chat compressor 242 may translate "should be a good game," which is the chat message of participant 3, into " 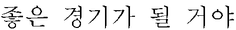 ." and count the number of tokens corresponding to the translated chat message of participant 3 as 7. The chat compressor 242 may count the total number of tokens for chat messages of participants 1 to 3 as 19.

The chat compressor 242 may identify that the number of tokens for each or all of the chat messages of participants 1 to 3 is increased after translation compared to before translation. For example, the chat compressor 242 may identify that the number of tokens corresponding to the chat message of participant 1 is increased from 3 to 5 by translation, the number of tokens corresponding to the chat message of participant 2 is increased from 4 to 7 by translation, and the number of tokens corresponding to the chat message of participant 3 is increased from 5 to 7 by translation. As a result, the chat compressor 242 may identify that the total number of tokens of chat messages of participants 1 to 3 is increased by about 58% from 12 to 19. Accordingly, the chat compressor 242 may perform a compression operation of another method (e.g., a text replacement scheme) without using the translated chat messages. According to an embodiment, the compression operation may include an operation of compressing the meaning of a non-text (e.g., an emoticon). If the emoticon is input, the chat compressor 242 may obtain the name of the input emoticon based on the LM. For example, the name of the emoticon that may be obtained by the LM may represent an emotion or facial expression expressed as an emoticon in text (e.g., a smiling face with open mouth or a crying face with tears). The chat compressor 242 may abbreviate the meaning of the emoticon by changing the name of the obtained emoticon to another text corresponding to a smaller number of tokens having substantially the same or similar meanings. The chat compressor 242 may more clearly abbreviate the meaning of the emoticon considering context information (e.g., a conversation context, a content genre, or a scene).

According to an embodiment, the chat service unit 240 and the chat compressor 242 may be an integrated hardware component or software included in at least one processor of the display device 202 or controlled by at least one processor, or physically distinguished hardware components or software.

According to an embodiment, the chat server 206 may include a plurality of servers, e.g., an open application programming interface (API) server 244, a chat service server 246, and a chatbot server 248.

According to an embodiment, the open API server 244 may be a server that the display device 202 (or another electronic device) may access to use a chat service or a chatbot service. For example, the display device 202 may communicate with the open API server 244 to request information associated with a chat service or to obtain a chatbot response. The open API server 244 and the display device 202 may perform communication based on, e.g., a hypertext transfer protocol (HTTP).

According to an embodiment, the chat service server 246 may manage information associated with the chat service (e.g., user account information, chat room information, chat messages, or cost information associated with the use of the chatbot server 248), and may be a server that performs an operation for providing a chatbot service between the open API server 244 and the chatbot server 248. For example, the chat service server 246 may receive a compressed message (or an abbreviated message) from the open API server 244 and may request the chatbot server 248 to provide a response message to the compressed message.

According to an embodiment, the chatbot server 248 may generate a response message to the compressed message based on the request of the chatbot service server 246, and may provide the generated response message to the open API server 244 as a chatbot response. The chatbot server 248 may include a large language model (LLM) and may be referred to as an LLM server. The LLM is a language model trained based on a large amount of data, and may be a language model larger than the LM included in the chat compressor 242 of the display device 202. The LLM may be used to generate answers or responses based on a given conversation or message. The LLM may enable language-based processing based on deep learning and natural language processing technology, and may also perform a function of inferring the meaning of a nonverbal message (e.g., emoticon) based on a given context. According to an embodiment, the chatbot server 248 may generate a response message to the compressed message using the compressed message as an input of the LLM.

According to an embodiment, the chat server 206 may not include the open API server 244, the chat service server 246, and the chatbot server 248, and may be a single server that performs functions of the open API server 244, the chat service server 246, and the chatbot server 248. Hereinafter, the operations of the open API server 244, the chat service server 246, and the chatbot server 248 are described distinctly, but the operations of the open API server 244, the chat service server 246, and the chatbot server 248 may also be performed by one independent server.

According to an embodiment, the display device 202 and the chat server 206 may perform the following operations.

In operation 302, the chat service unit 240 of the display device 202 may obtain a user input message as a chat message input by the user. According to an embodiment, when the user uses the chat service while the content is being displayed, the chat service unit 240 may obtain the user input message. The user may use the chat service by entering the chat room associated with the content being displayed or by opening a chat room associated with the content being displayed.

According to an embodiment, the user input message may be a message input using at least one of the remote controller 212, the mobile device 214, the voice input device 216, or the text input device 218, or a message input by a touch of the user on the touch screen of the display device 202. According to an embodiment, the user input message may include text and/or emoticons (or emojis) input or selected by the user. The chat service unit 240 may provide the user input message to the chat compressor 242, and the chat compressor 242 may receive the user input message from the chat service unit 240.

In operation 304, the chat compressor 242 may count the number of tokens corresponding to the received user input message. According to an embodiment, the chat compressor 242 may include a token counter for counting the number of tokens. The token counter may calculate how many tokens a natural language sentence such as the user input message is processed with.

In operation 306, the chat compressor 242 may perform a message compression operation. For example, the chat compressor 242 may convert or change the user input message into a compressed message based on an LM that may be used for an on-device AI function. According to an embodiment, the compressed message is an abbreviated message having the same or similar meaning as the user input message, and may include a smaller number of tokens than the number of tokens of the user input message counted in operation 304. According to an embodiment, the chat compressor 242 may use context information stored in the context DB 230 to convert or change the user input message into a compressed message. According to an embodiment, the chat compressor 242 may change the user input message to a compressed message based on any one of the compression operations (e.g., a text replacement operation, a translation operation, an emoticon compression operation, or an operation of deleting unnecessary or overlapping text) of various methods described above. The chat compressor 242 may provide a compressed message to the chat service unit 240.

In operation 308, the chat service unit 240 may receive a compressed message and transmit the same to the chat server 206, and may display the transmitted compressed message in the chat window. According to an embodiment, the chat service unit 240 may first display the compressed message and then transmit the compressed message to the chat server 206 according to the user's selection. According to an embodiment, the chat service unit 240 may include the compressed message in the request message and transmit the request message to the chat server 206. According to an embodiment, the request message may be an HTTP request message, and may be a message requesting to provide a response message to the compressed message.

According to an embodiment, the chat service unit 240 may receive and store the number of tokens for the compressed message transferred to the chat server 206 from the chat compressor 242. According to an embodiment, the chat service unit 240 may use the number of tokens for the stored compressed message to calculate a cost (e.g., a chatbot response generation cost) associated with the chat server 206. According to an embodiment, the chat service unit 240 may transmit information about the calculated cost to the chat server 206 (or the chat service server 246). According to an embodiment, the chat service unit 240 may not transmit information about the calculated cost. In this case, the chat server 206 (or the chat service server 246) may calculate the cost by counting the number of tokens of the compressed message.

In operation 310, the open API server 244 may receive the request message and may transmit the compressed message included in the received request message to the chat service server 246. According to an embodiment, when it is determined that the number of tokens of the compressed message is larger than or equal to the set number, the open API server 244 may not transfer the compressed message to the chat service server 246. In this case, the open API server 244 may transmit an indication message indicating that the number of tokens of the compressed message is excessively large to the display device 202. If the indication message is received, the chat service unit 240 of the display device 202 may transfer the compressed message to the chat compressor 242 so that a compression operation for reducing the number of tokens of the compressed message is additionally performed.

According to an embodiment, when the cost of using the chat server 206 is increased by a set amount or more, the at least one server in the chat server 206 may stop the operation for generating the chatbot response and may transmit a notification message to the display device 202. For example, the notification message may include information indicating that the cost of using the server is excessive.

In operation 312, the chat service server 246 may receive a compressed message from the open API server 244 and may request the chatbot server 248 to generate a response message to the compressed message. The chat service server 246 may transmit a compressed message to the chatbot server 248 together with the request. According to an embodiment, the chat service server 246 may transmit, to the chatbot server 248, compression instruction information instructing to compress or abbreviate the chatbot response and/or token number indication information indicating the number of tokens of the chatbot response or the range of the number of tokens.

In operation 314, the chatbot server 248 may receive the compressed message from the chatbot service server 246. According to an embodiment, the chatbot server 248 may receive compression instruction information and/or token number indication information.

In operation 316, the chatbot server 248 may generate a chatbot response, which is a response message to the compressed message, in response to the request of the chatbot service server 246. According to an embodiment, the chatbot server 248 may generate a chatbot response based on the compressed message using the LLM. For example, in response to the compressed message including any one of the chat messages of participants 1 to 3, the chatbot server 248 may generate a chatbot response as shown in Table 5 below.

**[Table 5]**

| |
|---|
| <compressed message> |
| Participant 1: exited |
| Participant 2: feeling anxious? |
| Participant 3: anticipating a great match |
| <chatbot response - 15 tokens> |
| Excitement is building! Feeling anxious? Anticipating a great match! |

Referring to Table 5, the chatbot response may include 15 tokens. According to an embodiment, the chatbot server 248 may receive compression instruction information and/or token number indication information. For example, the chatbot server 248 may abbreviate the chatbot response as shown in Table 5 as shown in Table 6 below, based on the compression instruction information.

**[Table 6]**

| |
|---|
| <chatbot response abbreviation - 10 tokens> |
| Excitement's building! Nervous? Anticipating a great game! |

Referring to Table 6, the chatbot response may include 10 tokens less than the number of tokens of the chatbot response as shown in Table 5. For example, the chatbot server 248 may abbreviate the chatbot response as shown in Table 5 as shown in Table 7 below, based on the compression instruction information and the token number indication information.

**[Table 7]**

| |
|---|
| <chatbot response abbreviation based on indicated token number - 5 tokens> |
| Anticipation's high! Nervous? Should be a good game! |

Referring to Table 7, the chatbot response may include five tokens based on the token number indication information when the token number indication information indicates the number of tokens that is five or fewer. According to an embodiment, the chatbot server 248 may use an exclamation or an emoticon or may perform translation to abbreviate the chatbot response.

In operation 318, if the chatbot response is generated, the chatbot server 248 may transmit the generated chatbot response to the chatbot service server 246.

In operation 320, the chat service server 246 may receive the chatbot response transmitted from the chatbot server 248. The chat service server 246 may store the chatbot response in the message DB 252 and transmit the chatbot response to the open API server 244.

According to an embodiment, operation 312 and operation 320 may be performed by the chat room manager 250 included in the chat service server 246. For example, the chat room manager 250 may store and manage messages of the chat room opened in association with the chat service in the message DB 252, control generation of a chatbot response of the chatbot server 248, or calculate or manage the cost associated with generation of the chatbot response. According to an embodiment, the cost associated with generating the chatbot response may be based on the number of tokens of the compressed message used to generate the chatbot response and/or the number of tokens of the chatbot response. According to an embodiment, the chat room manager 250 may correspond to at least one processor of the chat service server 246 or may be a separate component controlled by the at least one processor.

In operation 322, the open API server 244 may obtain a chatbot response from the chat service server 246 and may provide the obtained chatbot response to the display device 202. According to an embodiment, the open API server 244 may include the chatbot response in the response message and transmit the same to the display device 202. For example, the response message may be an HTTP response message, and may be a response message to the request message transmitted by the display device 202 in operation 308.

In operation 324, the chat service unit 240 of the display device 202 may receive a chatbot response from the open API server 244 and may display the received chatbot response as a response message to the user input message on a display (e.g., the chat window 104 of FIG. 1).

According to an embodiment, the display device 202 may perform the following operations of providing meta information to the chat server 206 (or the chatbot server 248) in order to obtain a more appropriate chatbot response.

According to an embodiment, the chat service unit 240 of the display device 202 may obtain meta information. For example, the meta information includes information based on the EPG 220 (e.g., at least one of broadcast time information, broadcast channel information, broadcast program title, broadcast program description, broadcast program genre, broadcast program cast information, broadcast program staff information, or broadcast program screen information), information obtained by screen analysis (or scene analysis) of the display device 202 (e.g., at least one of information about a person or an object appearing in the content, or background information about the content), and information obtained by audio analysis of the display device 202 (e.g., voice tone of a person in the content). It may include at least one of voice information or sound information, text information obtained from a screen of the content by a text detection operation, chat participant information (e.g., the number of participants, a participant nationality, a participant gender, a participant age, or participant account information), or conversation history information about a chat participant.

According to an embodiment, the chat service unit 240 may transfer the meta information to the chat compressor 242. The chat compressor 242 may count the number of tokens corresponding to the received meta information. The chat compressor 242 may compress meta information based on the counted number of tokens. For example, the chat compressor 242 may compress or abbreviate meta information based on any one of various compression operations (e.g., a text replacement operation, a translation operation, an emoticon compression operation, or an operation of deleting unnecessary or overlapping text) described above. The chat compressor 242 may provide the abbreviated meta information to the chat service unit 240.

According to an embodiment, the chat service unit 240 may transmit the abbreviated meta information to the chat server 206. For example, the abbreviated meta information may not be displayed in the chat window, and may be transmitted to the chat server 206 without user confirmation.

According to an embodiment, the open API server 244 may receive the abbreviated meta information and transmit the abbreviated meta information to the chat service server 246. The chat service server 246 may receive the abbreviated meta information from the open API server 244 and transfer the abbreviated meta information to the chatbot server 248. The chatbot server 248 may use the abbreviated meta information to generate a chatbot response to the user input message (or a compressed message).

According to an embodiment, the above-described operations associated with the display device 202 and the chat server 206 may be repeatedly performed.

According to an embodiment, the display device 202 may measure the chat amount (or chat message amount) in the chat room and the chat speed between participants, and may adjust the degree of activation of the chatbot response (e.g., the chatbot response generation amount and/or the chatbot response generation speed) based on the measurement result. For example, the display device 202 may increase the access frequency of the chat server 206 so that the chatbot response is generated more or faster as the amount of conversation in the chat room is less than a threshold or the conversation speed is slower. The display device 202 may reduce the access frequency of the chat server 206 so that the chatbot response is generated less or slower as the amount of conversation in the chat room is larger than or equal to the threshold or the conversation speed is faster. Accordingly, if there is a steady conversation between participants, the generation speed of the chatbot response may be reduced and the chatbot response may be output relatively less, and if there is little conversation between participants, the generation speed of the chatbot response may be increased and the chatbot response may be output relatively more.

According to an embodiment, when the user is watching the broadcast program, the display device 202 may adjust the degree of activation of the chatbot response so that the chatbot response is output less or slower as the broadcast program approaches the end time.

According to an embodiment, the display device 202 may calculate the time elapsed from the broadcast start time or the time remaining until the broadcast end time, based on the information about the broadcast start time or the broadcast end time obtained from the EPG. The display device 202 may adjust the degree of activation of the chatbot response based on the time elapsed from the broadcast start time or the time remaining until the broadcast end time.

For example, when the time (e.g., 12 minutes) elapsed from the broadcast start time is less than the threshold time (e.g., 50 minutes), the display device 202 may increase the degree of activation of the chatbot response. When the time (e.g., 51 minutes) elapsed from the broadcast start time is larger than or equal to the threshold time (e.g., 50 minutes), the display device 202 may reduce the degree of activation of the chatbot response.

For example, when the remaining time (e.g., 48 minutes) until the broadcast end time is larger than or equal to the threshold time (e.g., 10 minutes), the display device 202 may increase the degree of activation of the chatbot response. When the remaining time (e.g., 8 minutes) until the broadcast end time is less than the threshold time (e.g., 10 minutes), the display device 202 may reduce the degree of activation of the chatbot response.

According to an embodiment, the display device 202 may calculate a first ratio, which is a ratio of the elapsed time to the total broadcast time, or a second ratio, which is a ratio of the remaining time to the total broadcast time. The display device 202 may compare the first ratio or the second ratio with a threshold ratio, and may determine the degree of activation of the chatbot response based on the comparison result.

For example, when the first ratio is less than the first threshold ratio or the second ratio is larger than or equal to the second threshold ratio, the display device 202 may increase the degree of activation of the chatbot response. For example, when the first ratio is larger than or equal to the first threshold ratio or the second ratio is less than the second threshold ratio, the display device 202 may reduce the degree of activation of the chatbot response.

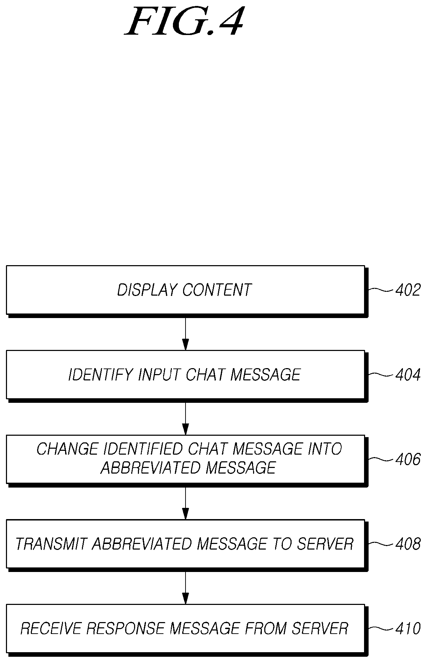

FIG. 4 is a flowchart illustrating operations of a display device according to an embodiment;
Referring to FIG. 4, in operation 402, the display device 202 may display content. According to an embodiment, the display device 202 may display an image streamed from an external electronic device or a content server or an image on a broadcast channel on the display according to the user's selection. According to an embodiment, the display device 202 may provide a chat service so that the user may perform chatting in real time while viewing content. When it is determined that the user opens a chat room or enters an already existing chat room, the display device 202 may allow the chatbot to participate in the chat room in which the user enters. According to an embodiment, the display device 202 may provide guidance regarding the chatbot to the chat room. For example, the display device 202 may output, to the chat room, information indicating that the AI-based chatbot participates in the chat and/or a danger notification regarding the presence of a non-human participant (chatbot).

In operation 404, the display device 202 may identify a chat message input by the user while the content is being displayed. For example, the chatting message may be the user input message input by the user using at least one of the remote controller 212, the mobile device 214, the voice input device 216, the text input device 218, or a touch on the touch screen.

In operation 406, the display device 202 may change the identified chat message to the abbreviated message (e.g., the compressed message of FIG. 3). For example, the display device 202 may change the identified chat message to the abbreviated chat message having the same or similar meaning as the identified chat message, based on the context information associated with the displayed content. According to an embodiment, the display device 202 may include an LM for changing the identified chat message to the abbreviated chat message. For example, the LM may be used to obtain a similar word or sentence capable of replacing a word or sentence included in a chat message, or to translate the chat message into another language. When the context information is used, a conversation context between chat participants or context associated with content may be considered to grasp the meaning of a word or sentence included in the chat message, and thus a clearer similar word or similar sentence may be obtained. According to an embodiment, the abbreviated chat message may include a smaller number of tokens than the number of tokens of the identified chat message.

In operation 408, the display device 202 may transmit the abbreviated message to a server (e.g., the chat server 206 or the open API server 244 of FIG. 3). According to an embodiment, the server may directly generate a chatbot response to the compressed message based on the LLM, or may include a separate server (e.g., the chatbot server 248 of FIG. 3) for generating the chatbot response.

In operation 410, the display device 202 may receive a response message from the server. According to an embodiment, the display device 202 may display the received response message in the chat room as a chatbot response.

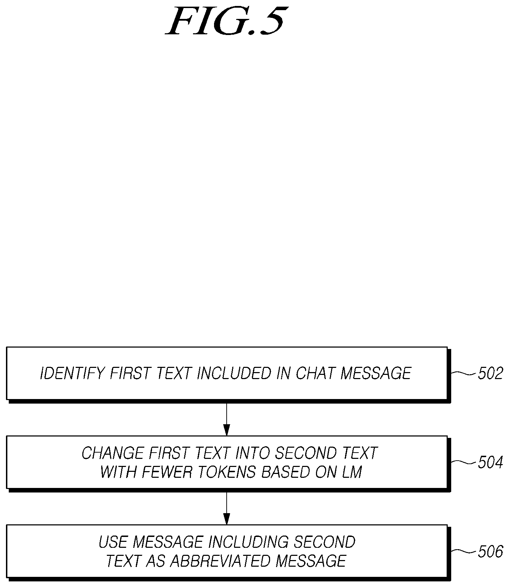

According to an embodiment, operation 406 may be performed based on various compression schemes. This is described with reference to FIGS. 5 to 7.

FIG. 5 is a flowchart illustrating an operation of abbreviating a chat message based on a text replacement scheme by a display device, according to an embodiment.

Referring to FIG. 5, in operation 502, the display device 202 may identify a first text included in a chat message. According to an embodiment, the first text may include at least one first word or at least one first sentence.

In operation 504, the display device 202 may change the first text to a second text having a small number of tokens based on the LM. According to an embodiment, the second text may include at least one second word or at least one second sentence having the same or similar meaning to the at least one first word or at least one first sentence.

In operation 506, the display device 202 may use the message including the second text as the abbreviated message.

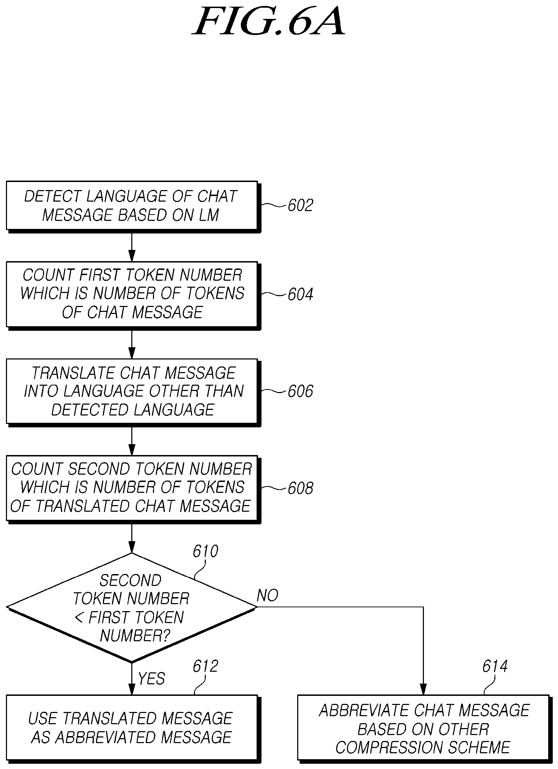

FIG. 6A is a flowchart illustrating an operation of abbreviating a chat message through translation by a display device according to an embodiment;
Referring to FIG. 6A, in operation 602, the display device 202 may detect the language (e.g., Korean) of the chat message based on the LM.

In operation 604, the display device 202 may count a first token number, which is the token number of the chat message.

In operation 606, the display device 202 may translate the chat message into a language (e.g., English) different from the detected language.

In operation 608, the display device 202 may count a second token number, which is the token number of the translated chat message.

In operation 610, the display device 202 may determine whether the second token number is less than the first token number.

In operation 612, when the second token number is less than the first token number, the display device 202 may use the translated message as the abbreviated message.

In operation 614, when the second token number is equal to or larger than the first token number, the display device 202 may abbreviate the chat message based on another compression scheme (e.g., a text replacement scheme).

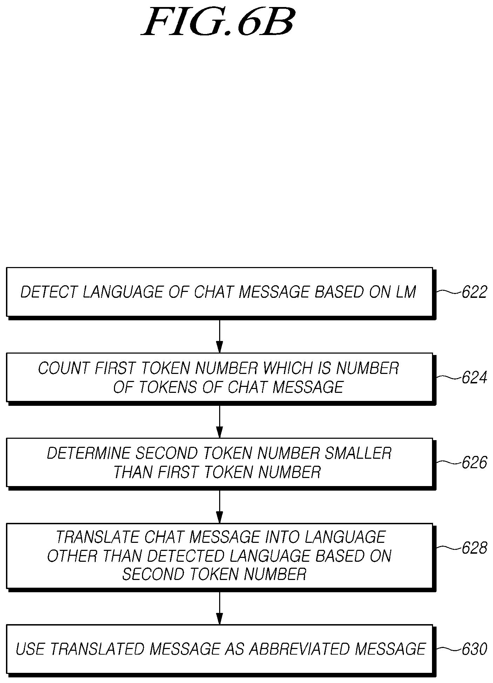

FIG. 6B is a flowchart illustrating another operation of abbreviating a chat message through translation by a display device according to an embodiment.

As shown in FIG. 6B, the display device 202 may abbreviate the chat message through token number limit translation.

Referring to FIG. 6B, in operation 622, the display device 202 may detect the language (e.g., Korean) of the chat message based on the LM.

In operation 624, the display device 202 may count the first token number (e.g., 15 tokens) which is the number of tokens of the chat message.

In operation 626, the display device 202 may determine the second token number (e.g., 10 tokens) less than the first token number. According to an embodiment, a range (e.g., 10 or less) of the number of tokens may be determined instead of the second number of tokens.

In operation 628, the display device 202 may translate the chat message into a language (e.g., English) different from the detected language, based on the determined second token number. For example, the display device 202 may perform translation so that the post-translation message includes the same or smaller number of tokens as the second number of tokens.

In operation 630, the display device 202 may use the translated message as the abbreviated message.

Table 8 below shows an example in which the display device 202 abbreviates a chat message using token number limit translation.

**[Table 8]**

| |
|---|
| <before translation........... Korean (19 tokens)> |
| 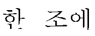 2 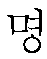 16 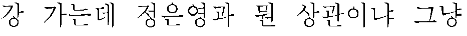 2 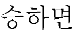 |
| 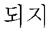 <after translation........... English (16 tokens)> |
| In a group, two advance to the round or 16. What does it have to do with Jung Eun-young? Just win two games |
| <after token number limit translation........English (10 tokens)> |
| In a group, two advance to round 16. Just win |

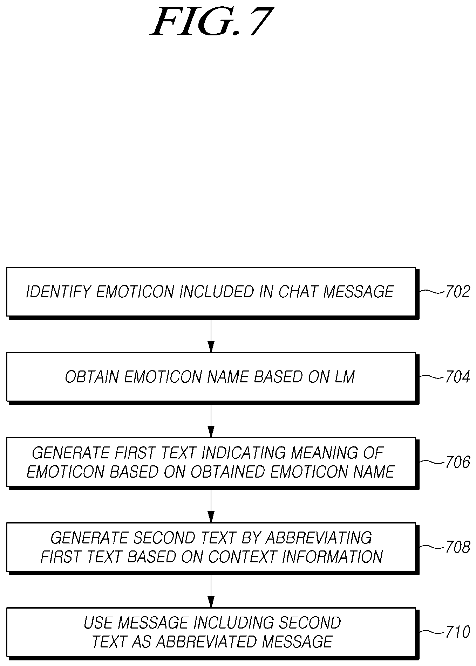

Referring to Table 8, a chat message having 19 tokens before translation may be changed to a chat message having 16 tokens after translation. Since the number of tokens of the post-translation chat message does not meet a predetermined number of tokens (e.g., 10 tokens) or a range of the number of tokens (e.g., 10 tokens or less), the display device 202 may compress the post-translation message. For example, the display device 202 may replace or briefly abbreviate the text of the post-translation chat message with another text to have less than or equal to 10 or less tokens. Accordingly, the message after the token number limit translation may be used as an abbreviated message meeting the determined token number or the token number range. FIG. 7 is a flowchart illustrating an operation of abbreviating a chat message through semantic compression of an emoticon by a display device, according to an embodiment;
Referring to FIG. 7, in operation 702, the display device 202 may identify an emoticon included in a chat message.

In operation 704, the display device 202 may obtain the name of the emoticon based on the LM.

In operation 706, the display device 202 may generate a first text indicating the meaning of the emoticon based on the obtained emoticon name.

In operation 708, the display device 202 may generate a second text by abbreviating the first text based on the context information.

In operation 710, the display device 202 may use a message including the second text as an abbreviated message.

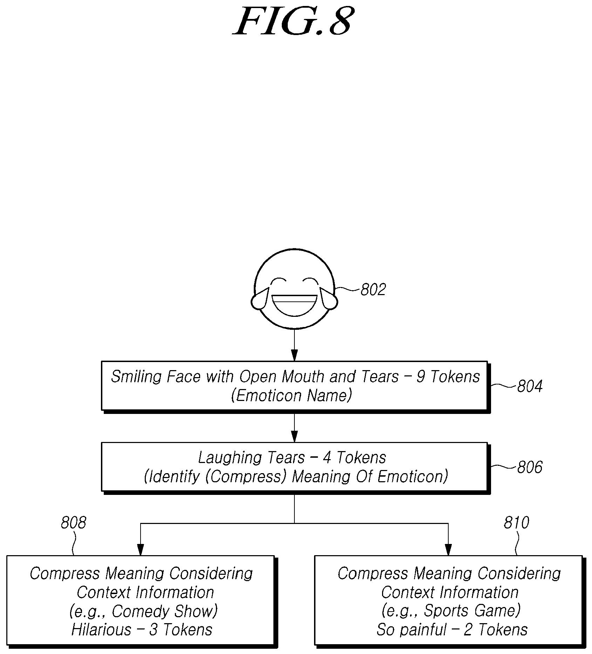

FIG. 8 is a view illustrating an example in which a meaning of an emoticon is compressed by a display device according to an embodiment;
Referring to FIG. 8, the display device 202 may obtain the name of the emoticon 802 based on the LM based on the identification of the emoticon 802 included in the chat message. For example, the name of the emoticon 802 may be "Smiling Face with Open Mouth and Tears 804" including 9 tokens.

In general, since the name of the emoticon indicates the emotion, facial expression, or state expressed by the emoticon, the display device 202 may identify the meaning of the emoticon 802 based on the name of the emoticon 802. Based on identifying the meaning of the emoticon 802, a first text indicating the meaning of the emoticon 802 may be generated. For example, the display device 202 may generate "Laughing Tears 806" of four tokens as the first text in the form of compressing "Smiling Face with Open Mouth and Tears 804", which is the name of the emoticon 802.

The display device 202 may perform semantic compression of the first text considering the context information. For example, when the content that the user is watching is a comedy show, the display device 202 may compress the meaning of the first text and change the same into the second text such as "Hilarious 808" of three tokens. For example, when the content that the user is watching is a sports game, the display device 202 may compress the meaning of the first text and change the same into the second text such as "So painful 810" of two tokens. The display device 202 may use a message including the second text as an abbreviated message.

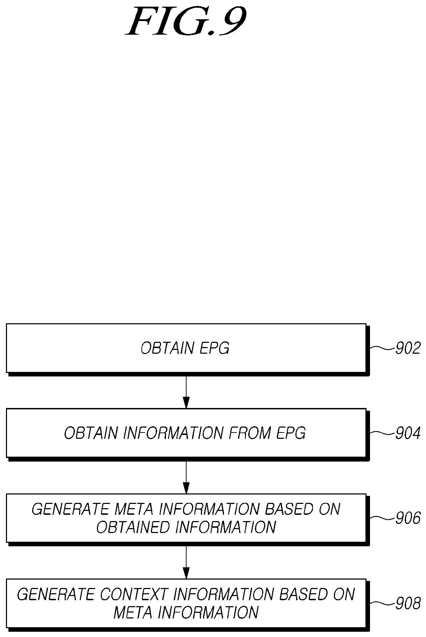

FIG. 9 is a flowchart illustrating an operation of generating context information based on an EPG by a display device, according to an embodiment;
Referring to FIG. 9, in operation 902, the display device 202 may obtain the EPG 220 from the broadcast server 204.

In operation 904, the display device 202 may obtain information from the EPG 220. According to an embodiment, the display device 202 may obtain text information included in the EPG 220. For example, the display device 202 may obtain, from the EPG 220, as information associated with one or more broadcast programs, at least one of broadcast time information (e.g., broadcast start time and/or broadcast end time), broadcast channel information (e.g., channel name, channel logo, or channel number), broadcast program title, broadcast program description, broadcast program genre (e.g., drama, sports, documentary, or entertainment), broadcast program cast information, broadcast program staff information, or broadcast program screen information.

In operation 906, the display device 202 may generate meta information based on the obtained information.

In operation 908, the display device 202 may generate context information based on the meta information. According to an embodiment, the display device 202 may periodically or aperiodically receive the EPG 220 and may update context information based on the received information about the EPG 220.

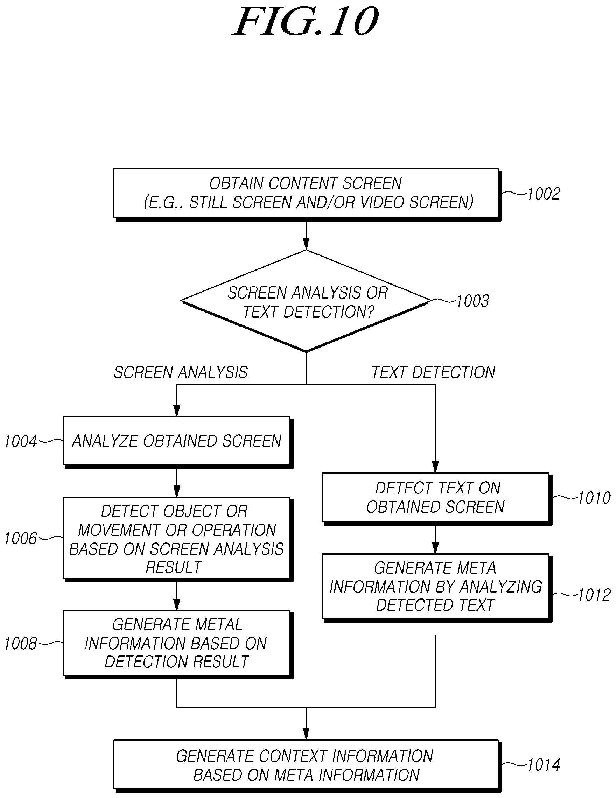

FIG. 10 is a flowchart illustrating an operation of generating context information based on a screen analysis operation or a text detection operation by a display device according to an embodiment;
Referring to FIG. 10, in operation 1002, the display device 202 may obtain a content screen (e.g., a still screen and/or a video screen).

In operation 1003, the display device 202 may determine whether to perform a screen analysis operation or a text detection operation, in response to the content screen being obtained.

When it is determined to perform the screen analysis operation in operation 1003, the display device 202 may perform operations 1004 to 1014.

In operation 1004, the display device 202 may analyze the obtained screen using a visual information processing function such as computer vision. According to an embodiment, the screen analysis of the display device 202 may be performed irregularly, and may be used to obtain the atmosphere, state, or information about the content.

In operation 1006, the display device 202 may detect an object, a feature of the object, or a movement or operation of the object, based on the result of the screen analysis. For example, the object may include at least one of a person, an animal, or an object.

In operation 1008, the display device 202 may generate meta information based on the detection result.

In operation 1014, the display device 202 may generate context information based on the meta information.

When it is determined to perform the text detection operation in operation 1003, the display device 202 may perform operations 1010 to 1014.

In operation 1010, the display device 202 may detect text on the obtained screen. According to an embodiment, the display device 202 may detect text using a predetermined text detection algorithm, based on the obtained screen.

In operation 1012, the display device 202 may generate meta information by analyzing the detected text.

In operation 1014, the display device 202 may generate context information based on the meta information.

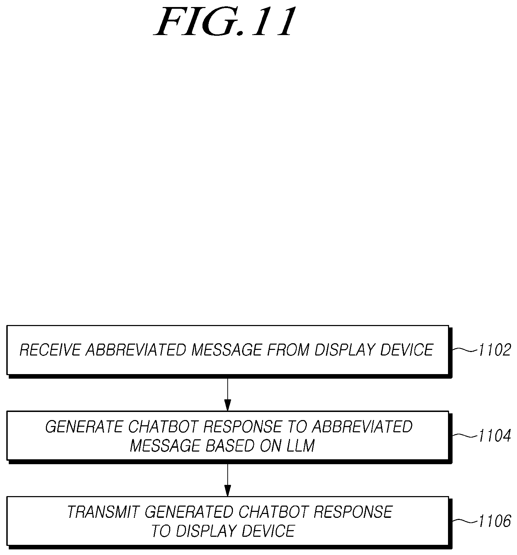

FIG. 11 is a flowchart illustrating operations of a server according to an embodiment;
Referring to FIG. 11, in operation 1102, a server (e.g., the chat server 206) may receive an abbreviated message (or a compressed message) from the display device 202. According to an embodiment, operation 1102 may be performed by the open API server 244. In this case, the open API server 244 may transfer the abbreviated message to the chat service server 246 so that the abbreviated message is provided to the chatbot server 244.

In operation 1104, the server may generate a chatbot response to the abbreviated message based on the LLM. According to an embodiment, operation 1104 may be performed by the chatbot server 244. In this case, the chatbot server 244 may generate a chatbot response based on a request from the chatbot service server 246.

According to an embodiment, when the server receives the meta information from the display device 202, the server may generate a chatbot response to the abbreviated message considering the received meta information. The received meta information may be meta information compressed or abbreviated by the display device 202.

In operation 1106, the server (e.g., the chat server 206 or the open API server 244) may transmit the generated chatbot response to the display device 202.

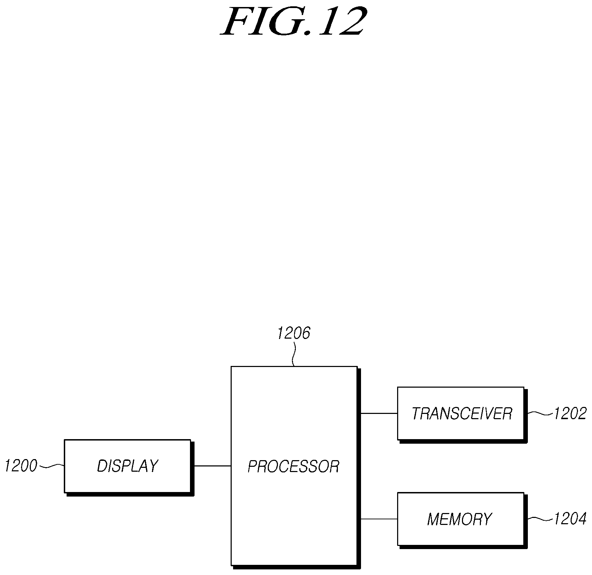

FIG. 12 is a block diagram illustrating a configuration of a display device according to an embodiment; and
Referring to FIG. 12, a display device 202 may include a display 1200, a transceiver 1202, a memory 1204, and a processor 1206. According to an embodiment, the display device 202 may include additional components (e.g., a communication interface for communication with an electronic device such as an audio input unit, an audio output unit, or a remote controller, or a tuner unit for receiving a broadcast signal) other than the illustrated components, or may omit at least one of the illustrated components.

According to an embodiment, the display 1200 may perform functions for outputting information in the form of numbers, characters, images, and/or graphics. The display 1200 may include at least one hardware module for output. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 1200 may display a screen corresponding to data received from the processor 1206. The display 1200 may be referred to as an 'output unit', a 'display unit', or by other terms having an equivalent technical meaning.

According to an embodiment, the transceiver 1202 may perform communication with an external electronic device (e.g., the mobile device 214) and/or at least one server (e.g., the broadcast server 204, the chat server 206, or the open API server 244). For example, the transceiver 1202 may perform communication with at least one server based on various wired/wireless communication technologies.

According to an embodiment, the memory 1204 may store various pieces of information or data associated with the operation of the display device 202 and may store at least one program. For example, the memory 1204 may store meta information, context information, a chat message input by the user, information about the number of tokens, meta information, or an LM used to compress the chat message.

According to an embodiment, the processor 1206 may be electrically or operatively connected to the display 1200, the transceiver 1202, and the memory 1204. The processor 1206 may be a processing circuit that executes at least one instruction of a program stored in the memory 1204. The processor 1206 may perform control on at least one of the other components of the display device 202 and/or perform an operation or data processing relating to communication. The processor 1206 may include at least one of a central processing unit (CPU), a neural processing unit (NPU), a graphics processing unit (GPU), a micro processing unit (MPU), a micro controller unit (MCU), an application processor (AP), a communication processor (CP), a system on chip (SoC), or an integrated circuit (IC) sensor hub, a supplementary processor, a communication processor), an application processor, an application specific integrated circuit (ASIC), or a field programmable gate arrays (FPGA), and may include a plurality of cores. The processor 1206 may control the chat service unit 240 or the chat compressor 242 of FIG. 3, or may perform a function corresponding to the operation of the chat service unit 240 or the chat compressor 242. The processor 1206 may perform the above-described operations of the display device 202 (e.g., the operations of the display device 202 described with reference to FIGS. 1 to 10).

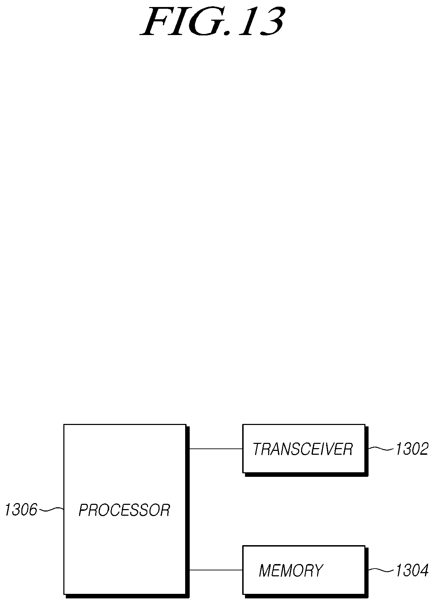

FIG. 13 is a block diagram illustrating a configuration of a server according to an embodiment.

Referring to FIG. 13, a server (e.g., the chat server 206 or any one server included in the chat server 206) may include a transceiver 1302, a memory 1304, and a processor 1306. According to an embodiment, the server 130 may include an additional component (e.g., a communication module for communication with another server or another electronic device) other than the illustrated components, or may omit at least one of the illustrated components.

According to an embodiment, the transceiver 1302 may communicate with the display device 202. For example, the transceiver 1302 may perform communication with the display device 202 based on various wired/wireless communication technologies.

According to an embodiment, the memory 1304 may store various pieces of information or data associated with the operation of the server and may store at least one program. For example, the memory 1304 may store the compressed message received from the display device 202, the abbreviated message, meta information, cost information based on the number of tokens, or the LLM used to generate the chatbot response.

According to an embodiment, the processor 1306 may be electrically or operatively connected to the transceiver 1302 and the memory 1304. The processor 1306 may be a processing circuit that executes at least one instruction of a program stored in the memory 1304. There may be one or more processors1306 which may perform the above-described operations of the server (e.g., the operations of the chat server 206 of FIGS. 2 and 3, or the operations of any one of the open API server 244 and the chatbot server 248 of FIG. 3, and the operations of the server described in connection with FIG. 11).

According to various embodiments of the disclosure, it is possible to provide the user with a chatbot response that is substantially identical or similar to the chatbot response based on an uncompressed chat message, while reducing server costs based on a compressed message (or an abbreviated message).

According to various embodiments of the disclosure, the display device 202 may control chatbot activation to enhance the user experience of a chat service and increase its usage.

According to various embodiments of the disclosure, since the display device 202 and/or the chat server 206 (or the chatbot server 248) may grasp content information, information about chat participants, or the context of the conversation based on meta information, it may be possible to efficiently provide a chat service corresponding to the user's viewing environment or chat environment.

The various embodiments and terms used herein are not intended to limit the technical features described herein to specific embodiments and should be understood to include various modifications, equivalents, or substitutes of the embodiment. In connection with the description of the drawings, like reference numerals may be used for similar or related components. In this document, each of the phrases such as "A or B," "at least one of A and B," "at least one of A or B," "A, B or C," "at least one of A, B and C," and "at least one of A, B, or C" may include any one of the items enumerated together in a corresponding one of the phrases, or all possible combinations thereof. Terms such as "the first," "the second," or "first," or "second" may be used simply to distinguish a corresponding component from another corresponding component, and do not limit the corresponding components in view of other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

The term "module" used in various embodiments of the document may include a unit implemented in hardware, software, or firmware and be used interchangeably with terms such as e.g., logic, logic block, part, component, or circuitry, for example. The module or unit may be a minimum unit or a part of the integrally configured component or the component that performs one or more functions. For example, according to an embodiment, the module or unit may be implemented in the form of an application-specific integrated circuit (ASIC).

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. A display device, comprising:
a display;
a transceiver,
memory to store at least one program; and
at least one processor, electrically connectable to the memory, and including a processing circuit to execute at least one instruction of the at least one program while connected to the memory, wherein at least one processor, individually or in combination, is configured to:
control the display to display content;
identify a chat message input by a user while the content is displayed;
change the identified chat message into an abbreviated message having a meaning identical or similar to the identified chat message, based on context information associated with the content being displayed; and
control the transceiver to transmit the abbreviated message to a server enabled to provide a chatbot response.

2. The display device of claim 1, wherein the abbreviated message includes a number of tokens smaller than a number of tokens of the identified chat message.

3. The display device of claim 1, wherein at least one processor, individually or in combination, is configured to:
change a first text included in the identified chat message into a second text including a number of tokens smaller than a number of tokens of the first text based on a language model, and
use a message including the second text as the abbreviated message.

4. The display device of claim 1, wherein at least one processor, individually or in combination, is configured to:
detect a language of the identified chat message based on a language model;
count a first token number which is a number of tokens of the identified chat message;
translate the identified chat message into a language different from the detected language;
count a second token number which is a number of tokens of the translated chat message; and
use the translated chat message as the abbreviated message in response to the second token number being smaller than the first token number.

5. The display device of claim 1, wherein at least one processor, individually or in combination, is configured to:
detect a language of the identified chat message based on a language model;
count a first token number which is a number of tokens of the identified chat message;
determine a second token number smaller than the first token number;
translate the identified chat message into a language different from the detected language based on the determined second token number; and
use the translated chat message as the abbreviated message.

6. The display device of claim 1, wherein at least one processor, individually or in combination, is configured to::
identify an emoticon included in the identified chat message;
obtain a name of the emoticon based on a language model;
identify a meaning of the emoticon based on the obtained name and generates a first text indicating the identified meaning;
generate a second text having a number of tokens smaller than a number of tokens of the first text by abbreviating the first text based on the context information; and
use a message including the second text as the abbreviated message.

7. The display device of claim 1, wherein the context information is generated based on meta information, and
wherein the meta information includes at least one of broadcast time information, broadcast channel information, a broadcast program title, a broadcast program description, a broadcast program genre, broadcast program cast information, broadcast program staff information, or broadcast program screen information obtained based on an electronic program guide (EPG).

8. The display device of claim 1, wherein the context information is generated based on meta information, and
wherein the meta information includes at least one of information about a person or an object appearing in the content or background information about the content obtained by screen analysis of the display device, voice or sound information obtained by audio analysis of the display device, text information obtained from a screen of the content by a text detection operation, information about one or more chat participants including the user, or conversation history information about the one or more chat participants.

9. The display device of claim 7 or 8, wherein at least one processor, individually or in combination, is configured to:
change the meta information to abbreviated information having a similar meaning to the meta information, and control the transceiver to transmit the abbreviated information to the server, and
wherein the abbreviated information includes a number of tokens smaller than a number of tokens of the meta information.

10. The display device of claim 1, wherein at least one processor, individually or in combination, is configured to:
receive a response message to the abbreviated message from the server through the transceiver; and
control the display to display the received response message as the chatbot response.

11. A method for providing a chat service by a display device, the method comprising:
displaying content;
identifying a chat message input by a user while the content is displayed;
changing the identified chat message into an abbreviated message having a meaning identical or similar to the identified chat message, based on context information associated with the content being displayed; and
transmitting the abbreviated message to a server enabled to provide a chatbot response.

12. The method of claim 11, wherein the abbreviated message includes a number of tokens smaller than a number of tokens of the identified chat message.

13. The method of claim 11, wherein the changing into the abbreviated message comprises changing a first text included in the identified chat message into a second text including a number of tokens smaller than the first text, based on a language model, and using a message including the second text as the abbreviated message.

14. The method of claim 11, wherein changing into the abbreviated message comprises:
detecting a language of the identified chat message based on a language model;
counting a first token number which is a number of tokens of the identified chat message;
translating the identified chat message into a language different from the detected language;
counting a second token number which is a number of tokens of the translated chat message; and
using the translated chat message as the abbreviated message in response to the second token number being smaller than the first token number.

15. The method of claim 11, wherein changing into the abbreviated message comprises:
detecting a language of the identified chat message based on a language model;
counting a first token number which is a number of tokens of the identified chat message;
determining a second token number smaller than the first token number;
translating the identified chat message into a language different from the detected language based on the determined second token number; and
using the translated chat message as the abbreviated message.
